(19) Europäisches Patentamt
European Patent Office
Office européen des brevets

(11) **EP 2 894 050 B1**

(12) **EUROPEAN PATENT SPECIFICATION**

(45) Date of publication and mention
of the grant of the patent:
**02.08.2017 Bulletin 2017/31**

(51) Int Cl.:
***B60C 11/11*** *(2006.01)*   ***B60C 11/12*** *(2006.01)*
***B60C 11/13*** *(2006.01)*   ***B60C 11/00*** *(2006.01)*

(21) Application number: **13835177.0**

(22) Date of filing: **09.09.2013**

(86) International application number:
**PCT/JP2013/074229**

(87) International publication number:
**WO 2014/038689 (13.03.2014 Gazette 2014/11)**

(54) **PNEUMATIC TIRE TREAD AND PNEUMATIC TIRE WITH SAID TREAD**

LUFTREIFENPROFIL UND LUFTREIFEN MIT DIESEM PROFIL

BANDE DE ROULEMENT POUR PNEUMATIQUE ET PNEUMATIQUE METTANT EN OEUVRE CETTE BANDE DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2012 PCT/JP2012/072891**

(43) Date of publication of application:
**15.07.2015 Bulletin 2015/29**

(73) Proprietor: **Compagnie Générale des Etablissements Michelin
63000 Clermont-Ferrand (FR)**

(72) Inventor: **FUKUDA Kenji
Tokyo 1631073 (JP)**

(74) Representative: **Diernaz, Christian
M. F. P. Michelin,
23, place des Carmes Dechaux,
DGD/PI-F35-Ladoux
63040 Clermont-Ferrand Cedex 09 (FR)**

(56) References cited:
**WO-A1-2013/088570     JP-A- H1 178 414
JP-A- H02 246 808     JP-A- H03 186 406
JP-A- H09 193 618     JP-A- S61 263 807
JP-A- 2001 130 220     JP-A- 2001 130 228
JP-A- 2003 054 217     JP-A- 2010 023 585
JP-A- 2010 234 897     JP-U- H01 133 004**

**Description**

[Technical Field]

The present invention relates to a pneumatic tyre tread and to a pneumatic tyre having said tread, and in particular to a pneumatic tyre tread having improved performance on snow and performance on ice by virtue of a reinforcing part provided on the front surface side wall of a block, and to a pneumatic tyre having said tread.

[Prior Art]

Winter tyres which are also called "studless" tyres are well known as tyres which can travel on winter road surfaces covered with snow or ice. Winter tyres are generally provided with a plurality of narrow incisions called sipes which open at the ground-contact surface, and adhesion to a road surface in winter is improved by means of what is known as an "edge" effect and a water film-removal effect, and also by using a compound which is softer than that used for tyres which are not for winter use.
The mechanism by which frictional force is generated with the road surface in a winter tyre actually differs depending on whether the road surface is snowy or icy, so it is known that even if a soft compound is used and a large number of narrow incisions are provided in blocks which are the ground-contact elements in order to improve performance on ice, there will be a reduction in block rigidity as a result, and this will hinder any improvement in the performance on snow.
It is known that the introduction of reinforcing parts onto the side walls of blocks is effective as a means for achieving good performance on ice and good performance on snow at the same time.
For example, Patent Document 1 (mainly fig. 3) describes a pneumatic tyre in which a balance between performance on snow and performance on ice is achieved by providing reinforcing parts employing a rubber having a JIS A hardness of 80 to 95 degrees on block side walls facing a transverse groove and an auxiliary transverse groove, in a block provided with three narrow incisions and one auxiliary groove.
Furthermore, Patent Document 2 (mainly fig. 2) describes a pneumatic tyre in which a balance between performance on snow and performance on ice is achieved by using a composition in which at least 50 parts by weight of carbon black and/or silica are combined with 100 parts by weight of a diene rubber containing 30 wt% or more of a rubber component having a glass transition temperature of -60°C or more, and by providing reinforcing parts employing rubber having a brittleness temperature of -30°C or less on the side walls of the blocks.
Furthermore, Patent document 3 (mainly fig. 1), which is a prior art document according to Article 54(3) EPC, describes a pneumatic tyre tread which achieves a balance between performance on snow and performance on ice by virtue of the fact that reinforcing layers (reinforcing parts) having a material modulus (elastic modulus) of 200 MPa or greater are provided to a thickness of less than 0.5 mm over a region of at least 50% of the block side walls.

[Prior Art Documents]

[Patent Documents]

    [Patent Document 1] JP 7-047814 A
    [Patent Document 2] JP 2010-105509 A
    [Patent document 3] PCT/JP2011/079186 (WO 2013/088570)

[Summary of the Invention]

[Problem to be Solved by the Invention]

However, it is difficult to achieve a high-level balance between performance on snow and performance on ice with the pneumatic tyres described in Patent Documents 1, 2 and 3, and improvement in the performance on ice in particular is inadequate, and there is a need for a pneumatic tyre which can achieve a higher-level balance between performance on snow and performance on ice from the point of view of safety of travel on winter road surfaces.
The present invention is intended to solve the problems of the prior art described above, and the aim thereof lies in providing a pneumatic tyre tread which can achieve a higher-level balance between performance on snow and performance on ice, and also in providing a pneumatic tyre having such a tread.

[Means for Solving the Problem]

In order to achieve the abovementioned aim, the present invention provides a pneumatic tyre tread formed by means of at least one rubber composition, the at least one rubber composition has an elastic modulus Et calculated from the tensile test defined in the standard ASTM D882-09; the tread comprises: at least one circumferential main groove, a plurality of auxiliary grooves, and a plurality of blocks which are defined by the circumferential main groove and the auxiliary grooves; at least one of the blocks from among the plurality of blocks comprises: an upper surface constituting a ground-contact surface at least partly in contact with a road surface when the tyre is rolling, two front surface side walls positioned along the tyre circumferential direction, and two side surface side walls positioned along the tyre axial direction; the upper surface of the block has two front surface edges formed at positions intersecting the two front surface side walls; the block has a reinforcing part provided on at least one of the two front surface side walls, the reinforcing part is formed by means of a material having an elastic modulus Ef at least 20 times greater than the elastic modulus Et of the rubber composition forming the tread, has a mean thickness of between 0.1 mm and 2.0 mm, and is provided in such a way as to face at least the auxiliary groove over a region of at least 60% of the front surface side wall; and the upper surface of the block is formed in such a way that when viewed from the direction of the tyre axis of rotation, if the distance from the tyre axis of rotation to any point on said upper surface is measured in the region excluding the two front surface edges, said distance is greater than a distance Re measured from the tyre axis of rotation to the two front surface edges, the difference G between a distance Rt measured from the tyre axis of rotation to the radially outermost position on said upper surface and the distance Re measured from the tyre axis of rotation to the two front surface edges is between 0.2 mm and 2.0 mm in a new article, and the distance between the radially outermost position of the reinforcing part and the front surface edge is no greater than 2.0 mm.

Here, "groove" refers to a space having a width and a depth which is constructed by connecting two opposing surfaces (wall surfaces, side walls) which do not come into contact with each other under normal usage conditions, by means of another surface (bottom surface).

Furthermore, "main groove" refers to a groove which is mainly responsible for fluid drainage and has a relatively large width among the various types of grooves formed in the tread. In many cases, "main groove" means a groove extending in a linear, zigzag or undulating manner in the tyre circumferential direction, but a groove having a relatively large width which is mainly responsible for fluid drainage and extends at an angle with respect to the direction of rotation of the tyre is also included.

Furthermore, grooves other than the "main groove" are called "auxiliary grooves".

Furthermore, "edge" refers to the intersection between the upper surface of a block and the front surface side wall or side surface side wall (the edge parts on the upper surface of the block or the boundary on the upper surface of the block with the front surface side wall or side surface side wall). The upper surface of the block which forms part of the ground-contact surface is defined by edges such as these. If a bevel is formed between the upper surface and the front surface side wall or side surface side wall, the bevelled part is understood as being part of the upper surface. The intersection between the upper surface of the block and the front surface side wall in the direction of rotation is referred to as the "front surface edge". According to the present invention, the front surface edge comes into contact with the road surface under specific road surface conditions, as will be described later.

Furthermore, "elastic modulus" refers to the elastic modulus in tension calculated from a tensile test curve obtained from the tensile test defined in the standard ASTM D882-09. The elastic modulus in tension E has the following relationship with the elastic shear modulus G, as described in "POLYMER PHYSICS" (Oxford, ISBN 978-0-19-852059-7, Chapter 7.7, Page 296), for example.

$$E = 2G(1+v)$$

Here, $v$ is Poisson's ratio, the Poisson's ratio of rubber material being a value very close to 0.5.

Moreover, when it is being confirmed that the elastic modulus Ef of the material forming the reinforcing part is at least 20 times greater than the elastic modulus Et of the rubber composition forming the tread, this confirmation can be made by substituting the abovementioned elastic modulus Et and elastic modulus Ef with the complex elastic modulus (dynamic shear modulus: G* of the material) M. The storage elastic modulus represented by G' and the loss elastic modulus represented by G", which are known dynamic properties, are measured by means of a viscosity analyser (viscoanalyser: Metravib VB4000) using a test piece moulded from the raw composition or a test piece which is combined with the composition after vulcanization. The test piece which is used is described in Figure X2.1 (a circular method) of the standard ASTM D 5992-96 (version published September 2006, initially approved in 1996). The diameter "d" of the test piece is 10 mm (consequently the test piece has a circular cross section of 78.5 mm$^2$), the thickness "L" of each part of the rubber compound is 2 mm, and the ratio "d/L" (described in paragraph X2.4 of the ASTM standard, in contrast

EP 2 894 050 B1

to the ratio "d/L" of 2 recommended in the standard ISO 2856) is 5. In the test, the response of a test piece comprising a vulcanized rubber composition subjected to a simple alternating sinusoidal shear load is measured at a frequency of 10 Hz. The maximum shear stress imposed during the test is 0.7 MPa. The measurement is taken by varying the temperature from Tmin, which is a temperature lower than the glass transition temperature (Tg) of the rubber material, to a maximum temperature Tmax in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The complex elastic modulus G* is defined in terms of the absolute values of the storage elastic modulus and the loss elastic modulus using the following formula:

$$G* = \sqrt{G'^2 + G''^2}$$

According to the present invention having the configuration described above, the distance from the tyre axis of rotation to the region of the upper surface excluding the two front surface edges is greater than the distance Re measured from the tyre axis of rotation to the two front surface edges, and the difference G between the distance Rt measured from the tyre axis of rotation to the radially outermost position on the upper surface of the block and the distance Re measured from the tyre axis of rotation to the two front surface edges is no less than 0.2 mm in a new article, so when the tyre is travelling on a road surface for which the coefficient of friction is insufficient to cause deformation of the ground-contact elements, such as an icy road surface, it is possible to prevent the front surface edges formed at the intersection of the block upper surface and the front surface side wall on which the reinforcing part is provided from coming into contact with the road surface. This means that it is possible to prevent the generation of a water film between the tread and the ice, which is well known as one of the causes of reducing the coefficient of friction on ice, and as a result it is possible to improve the performance on ice. In other words, if the difference G is less than 0.2 mm, the front surface edges come into contact with the road surface even if the coefficient of friction of the road surface is insufficient to cause deformation of the ground-contact elements, and as a result a water film is produced between the tread and the ice, so there is a risk of a drop in the performance on ice.

In addition, according to the present invention, the difference G is no greater than 2.0 mm, so when the tyre is travelling on a road surface for which the coefficient of friction is sufficiently high to cause deformation of the ground-contact elements, such as a snowy road surface, it is possible to generate a high local edge pressure as a result of the front surface edges formed at the intersection between the block upper surface and the front surface side walls on which the reinforcing parts are provided to come into contact with the road surface. That is to say, the effect of the reinforcing parts provided on the front surface side walls enables the front surface edges to bite effectively into the snow, and as a result it is possible to improve the performance on snow. In other words, if the difference G is greater than 2.0 mm, the front surface edges are unlikely to come into contact with the road surface, even on a road surface for which the coefficient of friction is sufficiently high to cause deformation of the ground-contact elements, such as a snowy road, and as a result the front surface edges are unlikely to bite into the snow, so there is a risk of a drop in the performance on snow.

In addition, according to the present invention, the distance between the position on the radially outermost side of the reinforcing part and the front surface edges is no greater than 2.0 mm, so when the tyre is travelling on a road surface for which the coefficient of friction is sufficiently high to cause deformation of the ground-contact elements, such as a snowy road surface, it is possible to effectively generate a high local edge pressure due to the effect of the reinforcing parts. In other words, if the distance between the position on the radially outermost side of the reinforcing part and the front surface edges is greater than 2.0 mm, then a high local edge pressure is unlikely to be generated even if the front surface edges come into contact with the road surface when the tyre is travelling on a road surface for which the coefficient of friction is sufficiently high to cause deformation of the ground-contact elements, such as a snowy road surface, and consequently there is a risk of a drop in the performance on snow.

According to the present invention, the reinforcing part provided on the front surface side wall is preferably provided at the front surface edge in such a way as to extend at least partly in the width direction of the front surface edge.

According to the present invention having the configuration described above, it is possible to reliably produce a high local edge pressure by means of the front surface edge due to the effect of the reinforcing part, and as a result it is possible to further improve the performance on snow while also improving the performance on ice.

According to the present invention, the reinforcing part provided on the front surface side wall is preferably provided at the front surface edge in such a way as to extend over the whole of the width direction of the front surface edge.

According to the present invention having the configuration described above, it is possible to more reliably produce a high local edge pressure by means of the front surface edge.

According to the present invention, the difference G on the upper surface of the block is preferably no greater than 1.5 mm.

4

According to the present invention having the configuration described above, it is possible to more reliably produce a high local edge pressure by means of the front surface edge on snow, and as a result it is possible to further improve the performance on snow while also improving the performance on ice.

According to the present invention, the reinforcing part provided on the front surface side wall of the block is preferably provided on both of the two front surface side walls of the block.

According to the present invention having the configuration described above, it is possible to produce a high local edge effect by means of the front surface edges formed at the intersection of the block upper surface and the front surface side walls on which the reinforcing part is provided during both acceleration and deceleration on snow, and as a result it is possible to further improve the performance on snow while also improving the performance on ice.

According to the present invention, when the upper surface of the block is viewed from the direction of the tyre axis of rotation, the angle between a straight line joining the two front surface edges and a tangent to the upper surface passing through the front surface edge is preferably 20° or more.

According to the present invention having the configuration described above, when the tyre is travelling on a road surface for which the coefficient of friction is insufficient to cause deformation of the ground-contact elements, such as an icy road surface, it is possible to ensure adequate contact between part of the upper surface of the block serving as the ground-contact surface and the road surface, while preventing the front surface edges from coming into contact with the road surface, and as a result it is possible to further improve the performance on ice. In other words, if this angle is less than 20°, it is not possible to reliably prevent the front surface edges from coming into contact with the road surface and there is a risk of a drop in the performance on ice.

According to the present invention, the reinforcing part provided on the front surface side wall of the block is preferably provided over a region of at least 75% of the front surface side wall.

According to the present invention having the configuration described above, it is possible to more reliably produce a high local edge pressure by means of the front surface edge formed at the intersection of the block upper surface and the front surface side wall on which the reinforcing part is provided, and as a result, it is possible to further improve the performance on snow while also improving the performance on ice.

According to the present invention, the reinforcing part provided on the front surface side wall of the block is preferably provided over the whole region of the front surface side wall.

According to the present invention having the configuration described above, it is possible to improve the performance on snow more reliably while also improving the performance on ice.

According to the present invention, the block is preferably formed in such a way that the mean distance in the tyre circumferential direction between the two front surface edges is at least 15 mm.

According to the present invention having the configuration described above, it is possible to prevent deformation of the blocks even if the tyre is travelling on a road surface for which the coefficient of friction is insufficient to cause deformation of the ground-contact elements, such as an icy road surface, and this makes it possible to prevent the generation of a water film between the tread and the ice, and as a result the performance on ice can be further improved.

According to the present invention, the block preferably has further a narrow incision opening to the upper surface and extending inside the block while also extending in the tyre width direction.

Here, the "narrow incision" refers to an incision formed by means of a knife or a blade etc. and is also known as a "sipe"; the width of this narrow incision at the tread surface is generally smaller than that of the auxiliary grooves and is around 2 mm or less.

According to the present invention having the configuration described above, the narrow incision partially reduces the block rigidity which is increased overall by means of the reinforcing part, so it is possible to improve adhesion with the road surface and adhesion with the road surface on ice in particular, and as a result the performance on ice can be improved. At the same time, the narrow incision makes it possible to assist deformation of the block when the tyre is travelling on a road surface for which the coefficient of friction is sufficiently high to cause deformation of the ground-contact elements, such as a snowy road surface, the high local edge pressure afforded by the front surface edge is further increased, the front surface edge can adequately bite into the snow, and as a result the performance on snow can be further improved. Furthermore, it is well known that the narrow incision can act as an additional storage region for removing the water film produced between the tread and the ice which is well-known as one of the causes of reducing the coefficient of friction on ice, and as a result the performance on ice can be further improved.

[Advantage of the Invention]

The pneumatic tyre tread and pneumatic tyre having such a tread according to the present invention make it possible to achieve a higher-level balance between performance on snow and performance on ice.

[Brief Description of the Figures]

[Fig. 1] is a perspective view schematically showing a pneumatic tyre tread according to a first mode of embodiment of the present invention;
[Fig. 2] is an enlargement in cross section of the block of the pneumatic tyre tread seen along the line II-II in fig. 1;
[Fig. 3] is an enlargement in cross section of the block of a pneumatic tyre tread according to a second mode of embodiment of the present invention;
[Fig. 4] is an enlargement in cross section of the block of a pneumatic tyre tread according to a third mode of embodiment of the present invention; and [Fig. 5] is enlargement in cross section of the block of a conventional pneumatic tyre tread.

[Mode of Embodiment of the Invention]

The pneumatic tyre tread and pneumatic tyre employing said tread according to preferred modes of embodiment of the present invention will be described below with reference to the appended figures.

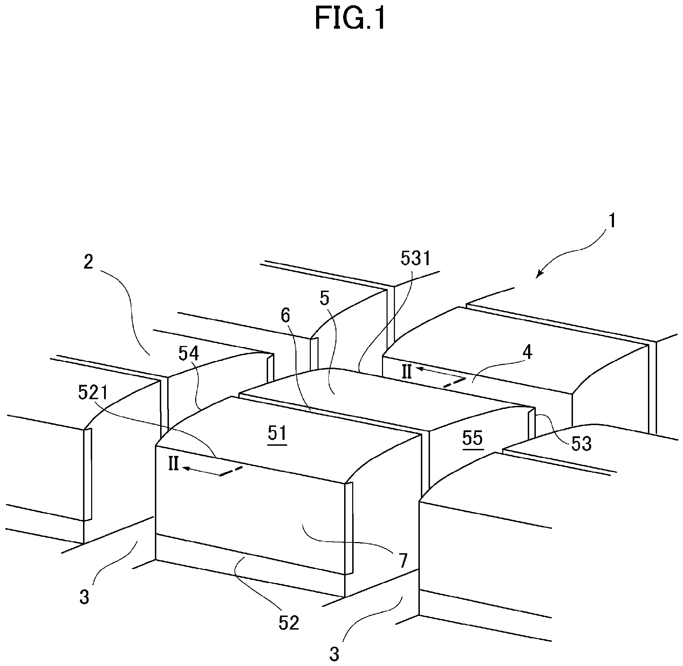

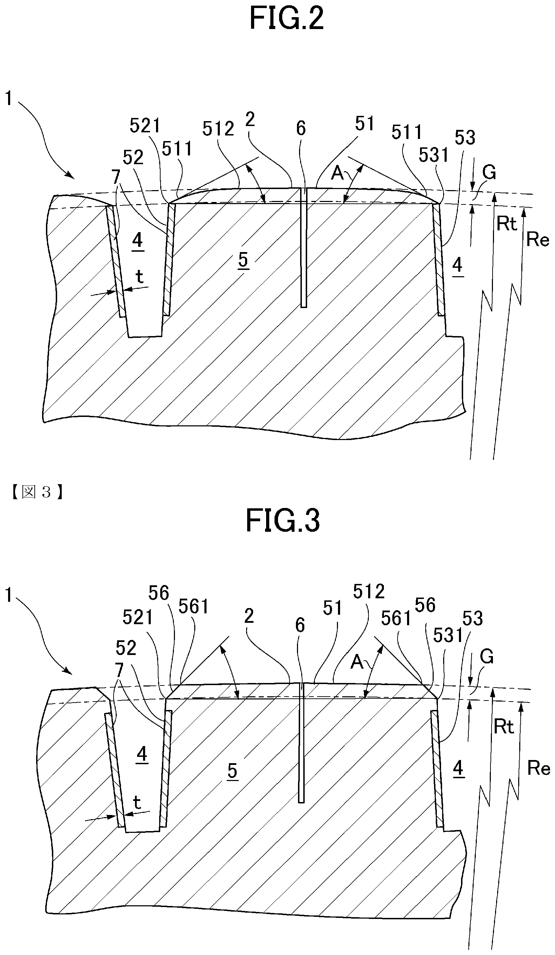

The pneumatic tyre tread according to a first mode of embodiment of the present invention will be described first of all with the aid of fig. 1 and fig. 2. Fig. 1 is a persprctive view schematically showing the pneumatic tyre tread according to the first mode of embodiment of the present invention, and fig. 2 is an enlargement in cross section of the block of the pneumatic tyre tread seen along the line II-II in fig. 1.

First of all, as shown in fig. 1, the reference symbol 1 is a pneumatic tyre tread according to the first mode of embodiment of the present invention. It should be noted that the size of the pneumatic tyre to which the pneumatic tyre tread 1 is applied in this example is 205/55R16.

The overall structure of the tread 1 will be described next with the aid of fig. 1 and fig. 2.

The tread 1, which comprises a rubber composition having an elastic modulus Et, has a ground-contact surface 2 which comes into contact with the road surface when the tyre is rolling, and two circumferential main grooves 3 and a plurality of auxiliary grooves 4 are formed therein. A plurality of blocks 5 are defined by the circumferential main grooves 3 and auxiliary grooves 4.

The blocks 5 comprise: an upper surface 51 forming part of the ground-contact surface 2; two side walls (front surface side walls) 52, 53 which are positioned longitudinally along the tyre circumferential direction and are formed in such a way as to face the auxiliary grooves 4; and two side walls (side surface side walls) 54, 55 which are positioned transversely along the direction of the tyre axis of rotation and are formed in such a way as to face the circumferential grooves 3.

The upper surface 51 comprises front surface edges 521, 531 which are formed on the edge parts intersecting the front surface side walls 52, 53. Furthermore, a narrow incision 6 which opens at the upper surface 51 and extends in the tyre width direction while also extending radially inside the blocks 5 is formed in the blocks 5. The narrow incision 6 also opens at the side surface side walls 54, 55. It should be noted that the narrow incision 6 may extend over a predetermined angle with respect to the radial direction in a range enabling the various functions thereof to be demonstrated. Furthermore, the "tyre width direction" indicates a direction perpendicular to the tyre circumferential direction in this mode of embodiment, but directions extending obliquely at a predetermined angle with respect to the tyre circumferential direction are also included.

Next, a reinforcing part 7 comprising a material having an elastic modulus Ef which is at least 20 times greater, and preferably at least 50 times greater than the elastic modulus Et of the rubber composition forming the tread 1 is provided on the two front surface side walls 52, 53. In this mode of embodiment, the elastic modulus Et of the rubber composition forming the tread 1 is 5.4 MPa, and the material forming the reinforcing part 7 is based on a natural resin the elastic modulus of which is 270 MPa, so the elastic modulus Ef is formed in such a way as to be 50 times greater than the elastic modulus Et.

The arrangement of the reinforcing parts 7 on the blocks 5 of the tread 1 will be described next.

According to this mode of embodiment, the reinforcing parts 7 are provided in such a way as to face the auxiliary grooves 4 over a region of at least 60%, preferably at least 75%, and more preferably the whole region of the front surface side walls 52, 53. Furthermore, the reinforcing parts 7 are provided in such a way that the mean thickness t thereof (shown in fig. 2) is less than 2.0 mm and preferably less than 1.0 mm. Here, the thickness of the reinforcing parts 7 constitutes the thickness in a direction perpendicular to the surface of the front surface side walls 52, 53 on which the reinforcing parts 7 are provided facing the auxiliary grooves 4, and the "mean thickness" is the mean value of the reinforcing parts 7 measured from the bottom surface side of the auxiliary grooves 4 to the upper surface 51 side of the blocks 5, in other words the mean value over essentially the whole surface of the reinforcing parts 7. According to this mode of embodiment, the reinforcing parts 7 are provided over a region of 84% of the front surface side walls 52, 53, and the mean thickness t is 0.5 mm. Here, the mean thickness t of the reinforcing parts 7 is preferably at least 0.2 mm.

The upper surface 51 of the blocks 5 of the tread 1 will be described next.

The upper surface 51 forms part of the ground-contact surface 2 of the tread 1 which comes into contact with the road surface when the tyre is rolling, the upper surface 51 being defined as the region of the block 5 which can partly come into contact with the road surface under specific conditions. The upper surface 51 is bound in the circumferential direction by the two circumferential edges (front surface edges) 521, 531. In other words, the upper surface 51 comprises the two circumferential edges 521, 531 at the edge parts thereof on the tyre circumferential direction side.

According to this mode of embodiment, the upper surface 51 of the blocks 5 of the tread 1 is formed in such a way that if the distance from the tyre axis of rotation to any point on the upper surface 51 is measured in the region excluding the two front surface edges 521, 531, said distance is greater than the distance Re measured from the tyre axis of rotation to the two front surface edges 521, 531. To be more specific, as shown in the cross section of fig. 2, the upper surface 51 comprises, in the circumferential direction: two portions 511 extending inwards of the upper surface 51 from the front surface edges 521, 531, where the radial distance from the tyre axis of rotation gradually increases; and an intermediate portion 512 lying between the portions 511 where said radial distance gradually increases. The intermediate portion 512 is formed with a curved shape such as to have essentially the same radius as that of the tyre. Moreover, it is assumed for the most part that the intermediate portion 512 of the main surface 51 of the blocks 5 which are formed in this way is always in contact with the road surface regardless of the condition of the road surface, but this varies according to load conditions etc. and it is also feasible for part of the two portions 511 where the radial distance gradually increases to be always in contact with the road surface. It should be noted that the front surface edges 521, 531 are formed in such a way as to come into contact with the road surface under specific road surface conditions, as will be described later.

The dimensional relationship of the reinforcing part 7 of the blocks 5 of the tread 1 and the front surface side walls 52, 53 on which the reinforcing part 7 is provided will be described next.

According to this mode of embodiment, the front surface side walls 52, 53 on which the reinforcing part 7 is provided are formed in such a way that the distance between the position on the outermost side of the reinforcing part 7 measured in the radial direction (the edge part on the outside in the radial direction of the reinforcing part 7) and the front surface edges 521, 531 is no greater than 2.0 mm. The reinforcing part 7 is preferably formed in such a way as to at least partly include the front surface edges 521, 531, and more preferably in such a way as to include the whole of the front surface edges 521, 531. In the example shown in fig. 2, the distance between the position on the outermost side of the reinforcing part 7 in the radial direction and the front surface edges 521, 531 is zero (0 mm), and the edge parts on the outermost side in the radial direction of the reinforcing part 7 provided on the front surface side walls 52, 53 are provided in such a way as to be present over the whole of the front edges 521, 531 in the width direction. On the other hand, the edge parts on the outermost side in the radial direction of the reinforcing part 7 provided on the front surface side walls 52, 53 may be provided in such a way as to be at least partly present on the front surface edges 521, 531 in the width direction of the front surface edges 521, 531.

Furthermore, the reinforcing part 7 is provided only in part of the region of the front surface side walls 52, 53 on the block 5, but the reinforcing part 7 is preferably present over the whole region of the front surface side walls 52, 53 in order to maximize the advantage thereof. This kind of reinforcing part 7 would of course be provided in such a way as to include the whole of the front surface edges 521, 531 in the same way as in this mode of embodiment.

The dimensional relationship of the upper surface 51 of the blocks 5 and the front surface edges 521, 531 will be described next.

In this mode of embodiment, the difference G between the distance Rt measured from the tyre axis of rotation to the portion (position) on the outermost side in the radial direction of the upper surface 51 of the block 5 and the distance Re likewise measured from the tyre axis of rotation to the two front surface edges 521, 531 is between 0.2 mm and 2.0 mm when the tread 1 is new, and this "difference G" is 0.5 mm in the example shown in fig. 2.

Furthermore, according to this mode of embodiment, an angle A is formed between a straight line joining the two front surface edges 521, 531 and a tangent to the upper surface 51 passing through the front surface edges 521, 531, as shown in fig. 2, in a view in cross section perpendicular to the tyre axis of rotation, the angle A being formed in such a way as to be 20° or more. As a result, when the tyre is travelling on a road surface for which the coefficient of friction is sufficiently high to cause deformation of the block, such as a snowy road surface, the front surface edges 521, 531 come into contact with the road surface; on the other hand, when the tyre is travelling on a road surface for which the coefficient of friction is insufficient to cause deformation of the block, such as an icy road surface, the front surface edges 521, 531 can be prevented from making contact with the road surface. The abovementioned angle A is 28° in the example shown in fig. 2. Here, the angle A is preferably no greater than 60°.

Furthermore, according to this mode of embodiment, at least one of the blocks 5 is formed in such a way that the mean distance between the two front surface edges 521, 531 measured in the tyre circumferential direction is at least 15 mm, so that it is possible to prevent the blocks from becoming deformed even when the tyre is travelling on a road surface for which the coefficient of friction is insufficient to cause deformation of the ground-contact elements, such as an icy road surface. This makes it possible to prevent the generation of a water film between the tread and the ice, and as a result the performance on ice can be further improved.

The action and effect afforded by the pneumatic tyre tread according to the abovementioned first mode of embodiment of the present invention will be described next.

According to this mode of embodiment, first of all, the reinforcing parts 7 are provided in such a way as to face the main grooves 3 and/or the auxiliary grooves 4 over a region of at least 60% of the front surface side walls 52, 53, and the elastic modulus Ef of the material forming the reinforcing parts 7 is set to be at least 20 times greater than the elastic modulus Et of the rubber composition forming the tread 1; this makes it possible to produce a high local front surface edge pressure through the effect of the reinforcing parts 7 when the tyre is travelling on a road surface for which the coefficient of friction is sufficiently high to cause deformation of the blocks 5, such as a snowy road surface. In this case, during acceleration or normal travel it is mainly one of the front surface edges 521 (or 531) which is in contact with the ground, and during deceleration it is mainly the other front surface edge 531 (or 521) which is in contact with the ground. That is to say, the tread according to this mode of embodiment is formed in such a way that under these road surface conditions, either of the two portions 511 where the radial distance of the upper surface 51 gradually increases is in contact with the ground. This means that by virtue of the tread of this mode of embodiment, the front surface edges 521, 531 of the blocks 5 can bite further into the snow, and as a result it is possible to improve the performance on snow.

Furthermore, according to this mode of embodiment, the mean thickness of the reinforcing part 7 is set at between 0.1 mm and 2.0 mm, so when the tyre is travelling on a road surface for which the coefficient of friction is insufficient to cause deformation of the blocks 5, such as an icy road surface, the front surface edges 521, 531 can be prevented from making contact with the road surface. That is the say, the tread according to this mode of embodiment is formed in such a way that under these road surface conditions, the portions of the upper surface 51 in the vicinity of the front surface edges 52, 53 (e.g., the two portions 511 where the radial distance gradually increases) do not come into contact with the ground. This makes it possible to prevent the generation of a water film which is produced between the tread and the ice, which is well known as one of the causes of reducing the coefficient of friction on ice, and as a result the tread according to this mode of embodiment makes it possible to improve the performance on ice.

A variant example of the pneumatic tyre tread according to the first mode of embodiment of the present invention will be described next.

In addition to the abovementioned material based on natural resin (including rubber material) it is equally possible to use, as the material of the reinforcing part 7, a material in which fibres are mixed or impregnated with a material based on natural resin, thermoplastic resins, or materials in which thermoplastic resins are laminated or mixed; it is also possible to use these in combination with a woven fabric or nonwoven fabric etc. impregnated with material based on natural resin with the aim of improving adhesion with the blocks 5 or providing further reinforcement. A fibre material such as woven fabric or nonwoven fabric etc. impregnated with material based on natural resin may be used alone as the reinforcing part 7.

Furthermore, when the tyre rotation direction is defined for the tyre tread, the reinforcing part 7 may be provided on either one of the two front surface side walls 52, 53.

Furthermore, the bottom surface of the auxiliary grooves 4 is not covered by the reinforcing part 7 in this mode of embodiment, but it is equally possible to adopt an arrangement in which the edge part of the reinforcing part 7 on the inside of the tyre in the radial direction is extended so that the reinforcing part 7 covers part or all of the bottom surface of the grooves 3, 4, with the aim of improving producibility etc. when the reinforcing part 7 is provided.

Furthermore, the reinforcing parts 7 are provided only on the front surface side walls 52, 53 of the blocks facing the auxiliary grooves 4 in this mode of embodiment, but the reinforcing parts 7 may also be provided on the side walls (side surface side walls) 54, 55 of the blocks facing the circumferential main grooves 3 in the same way. This mainly makes it possible to improve the effect of performance on snow in the tyre width direction afforded by the reinforcing parts 7, and in particular makes it possible to improve the steering performance.

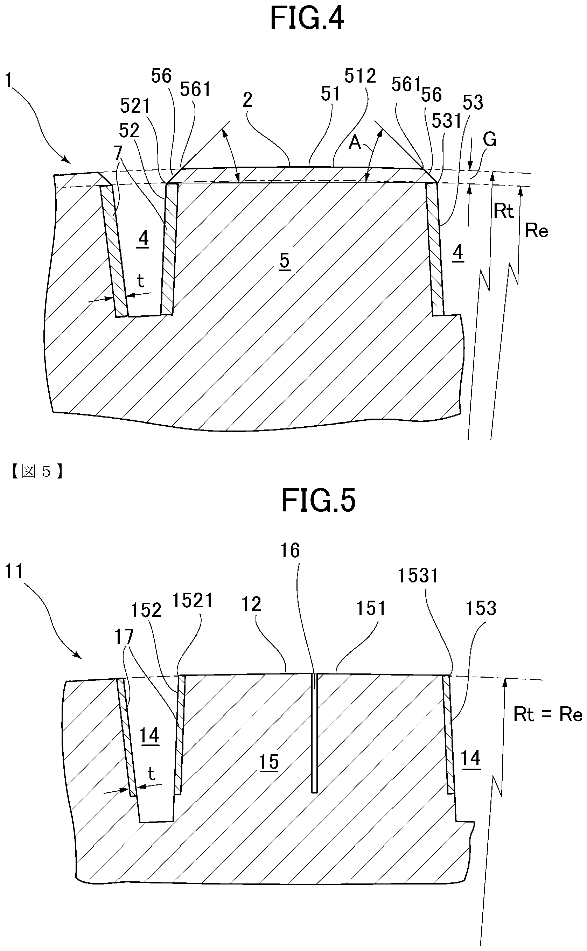

Furthermore, the shape of the upper surface 51 of the blocks 5 is not limited to the shapes shown in fig. 1 and fig. 2 of this mode of embodiment, or to the shapes shown in fig. 3 and fig. 4 of the second and third modes of embodiment which will be described later, and as mentioned above, the upper surface 51 may be formed as a curve such as to have a predetermined curvature overall, or may be formed with a triangular shape overall, as viewed in a cross section perpendicular to the tyre axis of rotation, provided that the distance from the tyre axis of rotation of the whole region of the block upper surface 51 excluding the front surface edges 521, 531 is greater than the distance of the front surface edges 521, 531 from the tyre axis of rotation, and the conditions of the distance Re and difference G etc. are satisfied.

A pneumatic tyre tread according to the second mode of embodiment of the present invention will be described next with the aid of fig. 3. Fig. 3 is an enlargement in cross section schematically showing the block of a pneumatic tyre tread according to the second mode of embodiment of the present invention.

As shown in fig. 3, the tread 1 according to the second mode of embodiment comprises the ground-contact surface 2 which comes into contact with the road surface when the tyre is rolling, and the two circumferential main grooves 3 and the plurality of auxiliary grooves 4 are formed therein in the same way as in the first mode of embodiment described above. The plurality of blocks 5 are defined by the circumferential grooves and auxiliary grooves. The blocks 5 comprise: the upper surface 51 forming part of the ground-contact surface 2; the two side walls (front surface side walls) 52, 53 which are separated in the longitudinal direction corresponding to the tyre circumferential direction; and the two side walls (side surface side walls) 54, 55 which are separated in the transverse direction corresponding to the tyre axial direction. The upper surface 51 intersects the front surface side walls 52, 53 and the front surface edges 521, 531 are formed at the intersections. Furthermore, the narrow incision 6 which opens at the upper surface 51 and extends in the tyre width direction while also extending in the tyre radial direction (or essentially in the radial direction) is formed in the block 5. The reinforcing part 7 is provided on the two front surface side walls 52, 53.

According to this mode of embodiment, the reinforcing parts 7 are provided in such a way as to face the auxiliary grooves 4 over a region of at least 60% and preferably at least 75% of the front surface side walls 52, 53, and the mean thickness t thereof is less than 2.0 mm and preferably less than 1.0 mm. The front surface side walls 52, 53, on which the reinforcing parts 7 are provided, are provided in such a way that the distance between the position at the outermost side of the reinforcing parts 7 measured in the radial direction and the front surface edges 521, 531 is no greater than 2.0 mm. In the example shown in fig. 3, the reinforcing parts 7 are provided over a region of 90% of the front surface side walls 52, 53, the mean thickness t is 0.5 mm, and the distance between the position at the outermost side of the reinforcing parts 7 measured in the radial direction and the front surface edges 521, 531 is 1.0 mm.

The front surface edges 521, 531 are formed on the upper surface 51 in the same way as in the first mode of embodiment described above. Furthermore, in this mode of embodiment, two bevelled parts 56 extending from the front surface edges 521, 531 are formed on the upper surface 51. According to this mode of embodiment, edges 561 which are separate from the front surface edges 521, 531 are formed on the upper surface 51 by the bevelled parts 56, but the edges 561 formed by the bevelled parts 56 are different from the front surface edges 521, 531 and always come into contact with the road surface regardless of the road surface condition. The intermediate region 512 of the upper surface 51 lying between the edges 561 is always in contact with the road surface regardless of the road surface condition.

In this mode of embodiment also, the difference G between the distance Rt measured from the axis of rotation to the outermost side of the upper surface of the block 5 and the distance Re likewise measured from the axis of rotation to the two front surface edges 521, 531 is between 0.2 mm and 2.0 mm when the tread 1 is new, and the tread is formed in such a way that the distance measured from the axis of rotation to any point on the upper surface 51 excluding the front surface edges 521, 531 (any point over the whole region of the upper surface 51 excluding the front surface edges 521, 531) is greater than Re. The difference G is 0.5 mm in the example shown in fig. 3.

Furthermore, according to this mode of embodiment, the angle A is formed between a straight line joining the two front surface edges 521, 531 and a tangent to the upper surface 51 passing through the front surface edges 521, 531, as shown in fig. 3, the angle A being formed in such a way as to be 20° or more. According to this mode of embodiment, the tangent to the upper surface 51 passing through the front surface edges 521, 531 is the straight line of the bevelled parts 56, and the shape angle of the bevelled parts 56 is essentially the abovementioned angle A. As a result, when the tyre is travelling on a road surface for which the coefficient of friction is sufficiently high to cause deformation of the block, such as a snowy road surface, the front surface edges 521, 531 come into contact with the road surface; on the other hand, when the tyre is travelling on a road surface for which the coefficient of friction is insufficient to cause deformation of the block, such as an icy road surface, the front surface edges 521, 531 can be prevented from making contact with the road surface. The abovementioned angle A is 45° in the example shown in fig. 3.

The action and effect afforded by the pneumatic tyre tread according to the abovementioned second mode of embodiment of the present invention will be described next.

According to this mode of embodiment, the reinforcing parts 7 are not included on the front surface edges 521, 531, in other words, the reinforcing parts 7 are not provided in such a way as to extend as far as the front surface edges 521, 531, but even in this case, the effect of the reinforcing parts 7 makes it possible to produce a high local edge pressure at the front surface edges 521, 531 of the blocks 5 when the tyre is travelling on a road surface for which the coefficient of friction is sufficiently high to cause deformation of the blocks 5, such as a snowy road surface, and the performance on snow can be effectively improved.

Furthermore, the bevelled parts 56 extending from the front surface edges 521, 531 are formed on the upper surface 51 of the blocks 5, so it is possible to more reliably prevent the front surface edges 521, 531 from coming into contact with the road surface when the tyre is travelling on a road surface for which the coefficient of friction is insufficient to cause deformation of the blocks 5, such as an icy road surface, it is possible to prevent the generation of a water film which is produced between the tread and the ice, which is well known as one of the causes of reducing the coefficient of friction on ice, and as a result it is possible to improve the performance on ice.

Moreover, according to a variant example which is not shown in the figures, the relationships between the abovementioned distances Rt, Re and the difference G may be satisfied between the side wall portions formed by the narrow incision 6 and the front surface side walls 51, 52 with or without providing the reinforcing parts 7 on the side wall portions formed by the narrow incision 6 provided in the block 5, and said relationships may be satisfied between the side wall portions formed by the narrow incision 6 and the side wall portions formed by another narrow incision 6 when a plurality of narrow incisions 6 are provided.

A pneumatic tyre tread according to the third mode of embodiment of the present invention will be described next with the aid of fig. 4. Fig. 4 is an enlargement in cross section schematically showing the block of a pneumatic tyre tread according to the third mode of embodiment of the present invention.

As shown in fig. 4, the tread 1 according to the third mode of embodiment comprises the ground-contact surface 2 which comes into contact with the road surface when the tyre is rolling, and the two circumferential main grooves 3 and the plurality of auxiliary grooves 4 are formed therein in the same way as in the first mode of embodiment described above. The plurality of blocks 5 are defined by the circumferential main grooves and auxiliary grooves. The blocks 5 comprise: the upper surface 51 forming part of the ground-contact surface 2; the two side walls (front surface side walls) 52, 53 which are positioned in the longitudinal direction corresponding to the tyre circumferential direction; and the two side walls (side surface side walls) 54, 55 which are positioned in the transverse direction corresponding to the tyre axial direction. The upper surface 51 intersects the front surface side walls 52, 53 and the front surface edges 521, 531 are formed at the intersections. The reinforcing part 7 is provided on the two front surface side walls 52, 53.

According to this mode of embodiment also, the reinforcing parts 7 are provided in such a way as to face the auxiliary grooves 4 over a region of at least 60% and preferably at least 75% of the front surface side walls 52, 53, and the mean thickness t thereof is less than 2.0 mm and preferably less than 1.0 mm. Furthermore, the reinforcing parts 7 are provided in such a way that the distance between the position on the outermost side of the reinforcing parts 7 measured in the radial direction and the front surface edges 521, 531 is no greater than 2.0 mm. In the example shown in fig. 4, the reinforcing parts 7 are provided over the whole region of the front surface side walls 52, 53 and are formed in such a way as to include the whole of the front surface edges, the mean thickness t is 1.0 mm, and the distance between the position at the outermost side of the reinforcing parts 7 measured in the radial direction and the front surface edges 521, 531 is zero (0 mm).

Furthermore, according to this mode of embodiment, the two bevelled parts 56 extending from the front surface edges 521, 531 are formed on the upper surface 51. The edges 561 which are separate from the front surface edges 521, 531 are formed on the upper surface 51 by the bevelled parts 56, but the edges 561 formed by the bevelled parts 56 are different from the front surface edges 521, 531 and always come into contact with the road surface regardless of the road surface condition. The intermediate region 512 of the upper surface 51 lying between the edges 561 is always in contact with the road surface regardless of the road surface condition.

In this mode of embodiment also, the difference G between the distance Rt measured from the axis of rotation to the outermost side of the upper surface 51 of the block 5 and the distance Re likewise measured from the axis of rotation to the two front surface edges 521, 531 is between 0.2 mm and 2.0 mm when the tread 1 is new, and the tread is formed in such a way that the distance from the axis of rotation to any point on the upper surface 51 excluding the front surface edges 521, 531 is greater than Re. The difference G is 0.5 mm in the example shown in fig. 4.

Furthermore, according to this mode of embodiment, the angle A is formed between a straight line joining the two front surface edges 521, 531 and a tangent to the upper surface 51 passing through the front surface edges, as shown in fig. 4, the angle A being formed in such a way as to be 20° or more. According to this mode of embodiment, the tangent to the upper surface 51 passing through the front surface edges is the shape angle of the bevelled parts 56, and according to this mode of embodiment the shape angle of the bevelled parts 56 is essentially the abovementioned angle A. As a result, when the tyre is travelling on a road surface for which the coefficient of friction is sufficiently high to cause deformation of the block, such as a snowy road surface, the front surface edges 521, 531 come into contact with the road surface; on the other hand, when the tyre is travelling on a road surface for which the coefficient of friction is insufficient to cause deformation of the block, such as an icy road surface, the front surface edges 521, 531 can be prevented from making contact with the road surface. The abovementioned angle A is 45° in this mode of embodiment.

The action and effect afforded by the pneumatic tyre tread according to the abovementioned third mode of embodiment of the present invention will be described next.

According to this mode of embodiment, the reinforcing parts 7 have a mean thickness of 1.0 mm and are provided over the whole region of the front surface side walls 52, 53 including the whole of the front side edges 521, 531, so when the tyre is travelling on a road surface for which the coefficient of friction is sufficiently high to cause deformation of the block 5, such as a snowy road surface, it is possible to produce higher local edge pressure at the front surface edges 521, 531 of the block 5 by virtue of the effect of the reinforcing parts 7, and the performance on snow can be more effectively improved.

Furthermore, the bevelled parts 56 are provided and therefore when the tyre is travelling on a road surface for which the coefficient of friction is insufficient to cause deformation of the block 5, such as an icy road surface, the front surface edges 521, 531 are prevented from coming into contact with the road surface, so it is possible to prevent the generation of a water film which is produced between the tread and the ice, and as a result of the performance of ice can be improved.

Preferred modes of embodiment of the present invention have been described above, but the present invention is not limited to the modes of embodiment shown in the figures and a number of variant modes may be implemented.

Moreover, fig. 5 is an enlargement in cross section schematically showing the block of a conventional pneumatic tyre tread. A block 15 of this conventional pneumatic tyre tread comprises an upper surface 151 forming part of a ground-contact surface 12, and front surface edges 1521, 1531 are formed at the intersections of front surface side walls 152, 153. A narrow incision 16 which opens at the upper surface 151 and extends transversely and radially inside the tyre is formed in the block 15. Reinforcing parts 17 are provided on the two front surface side walls 152, 153 in such a way as to include the whole of the front surface edges 1521, 1531. The mean thickness t of the reinforcing parts 17 is 0.5 mm, and the reinforcing parts 17 are provided in such a way as to face auxiliary grooves 14 over a region of 84% of the front surface side walls 152, 153. The distance Rt measured from the axis of rotation to the portion on the outermost side of the upper surface of the block 15 is equal to the distance Re likewise measured from the axis of rotation to the two front surface edges 1521, 1531, and the distance from the axis of rotation to any point on the upper surface 151 is also equal to Rt and Re.

[Exemplary Embodiments]

The results of tests carried out using a simulation (finite element method) employing commercially-available computer software will be described next in order to clarify the advantage of the present invention, the tests involving blocks of a pneumatic tyre tread according to a conventional example provided with a reinforcing layer having a known form, and blocks of six types of pneumatic tyre tread according to exemplary embodiments of the present invention.

Exemplary Embodiments 1 to 3 relate to block models provided with reinforcing parts in accordance with the first mode of embodiment, in which there are three different values for the difference G between the distance measured from the tyre axis of rotation to the portion on the outermost side of the upper surface of the block, and the distance likewise measured from the tyre axis of rotation to the two front surface edges. Exemplary Embodiments 4 to 6 relate to block models provided with reinforcing parts in accordance with the second mode of embodiment, in which there are also three different values for the difference G between the distance measured from the tyre axis of rotation to the portion on the outermost side of the upper surface of the block, and the distance likewise measured from the tyre axis of rotation to the two front surface edges.

The block model size in the conventional example and in the six models in accordance with the exemplary embodiments was in each case a cuboid block having a short side of length 10 mm, a long side of length 20 mm and a height of 10 mm, formed using the same rubber-based material (elastic modulus 5.4 MPa), the narrow incisions each having a width of 0.4 mm and depth of 7 mm and opening at the upper surface of the block. The reinforcing parts were formed from the same material (elastic modulus 270 MPa) and the elastic modulus of the material of the reinforcing parts was 50 times the elastic modulus of the rubber-based material of the blocks.

With suitable loading applied to the block models set in this way, the coefficient of friction under road surface conditions corresponding to an icy road surface was obtained. The calculation results are shown in tables 1 and 2. In tables 1 and 2, the calculated values are shown as an index taking the conventional example as 100, and higher numerical values are more favourable.

[Table 1]

|  | Exemplary Embodiment 1 | Exemplary Embodiment 2 | Exemplary Embodiment 3 | Conventional Example |
|---|---|---|---|---|
| Difference G (mm) | 0.5 | 1.0 | 1.5 | 0 |
| Coefficient of friction on ice (index) | 102 | 104 | 105 | 100 |

[Table 2]

|  | Exemplary Embodiment 4 | Exemplary Embodiment 5 | Exemplary Embodiment 6 | Conventional Example |
|---|---|---|---|---|
| Difference G (mm) | 0.5 | 1.0 | 1.5 | 0 |
| Coefficient of friction on ice (index) | 107 | 108 | 102 | 100 |

As shown in tables 1 and 2, it can be confirmed that the pneumatic tyre treads according to Exemplary Embodiments 1 to 6 made it possible to effectively achieve improved performance on ice.

[Key to Symbols]

| | |
|---|---|
| 1 | Pneumatic tyre tread |
| 2 | Ground-contact surface |
| 3 | Circumferential main groove |
| 4 | Auxiliary groove |
| 5 | Block |
| 51 | Block upper surface (part of which includes the ground-contact surface 2) |
| 52, 53 | Side wall on circumferential direction side, front surface side wall |
| 521, 531 | Front surface edge |
| 54, 55 | Side wall on tyre width direction side, side surface side wall |
| 56 | Bevelled part |
| 6 | Narrow incision (sipe) |
| 7 | Reinforcing part |

**Claims**

1. Pneumatic tyre tread (1) formed by means of at least one rubber composition, the at least one rubber composition has an elastic modulus Et calculated from the tensile test defined in the standard ASTM D882-09;

the tread (1) comprises: at least one circumferential main groove (3), a plurality of auxiliary grooves (4), and a plurality of blocks (5) which are defined by the circumferential main groove (3) and the auxiliary grooves (4);

at least one of the blocks (5) from among the plurality of blocks (5) comprises: an upper surface (51) constituting a ground-contact surface (2) at least partly in contact with a road surface when the tyre is rolling, two front surface side walls (52, 53) positioned along the tyre circumferential direction, and two side surface side walls (54, 55) positioned along the tyre axial direction;

the upper surface (51) of the block (5) has two front surface edges (521, 531) formed at positions intersecting the two front surface side walls (52, 53);

the block (5) has a reinforcing part (7) provided on at least one of the two front surface side walls (52, 53), the reinforcing part (7) is formed by means of a material having an elastic modulus Ef at least 20 times greater than the elastic modulus Et of the rubber composition forming the tread (1), has a mean thickness of between 0.1 mm and 2.0 mm, and is provided in such a way as to face at least the auxiliary groove (4) over a region of at least 60% of the front surface side wall (52, 53); and

the upper surface (51) of the block (5) is formed in such a way that when viewed from the direction of the tyre axis of rotation, if the distance from the tyre axis of rotation to any point on said upper surface (51) is measured in the region excluding the two front surface edges (521, 531), said distance is greater than a distance Re measured from the tyre axis of rotation to the two front surface edges (521, 531), the difference G between a distance Rt measured from the tyre axis of rotation to the radially outermost position on said upper surface (51) and the distance Re measured from the tyre axis of rotation to the two front surface edges (521, 531) is between 0.2 mm and 2.0 mm in a new article, and the distance between the radially outermost position of the reinforcing part (7) and the front surface edge (521, 531) is no greater than 2.0 mm.

2. Pneumatic tyre tread (1) according to Claim 1, in which the reinforcing part (7) provided on the front surface side wall (52, 53) of the block (5) is provided at the front surface edge (521, 531) in such a way as to extend at least partly in the width direction of the front surface edge (521, 531).

3. Pneumatic tyre tread (1) according to Claim 2, in which the reinforcing part (7) provided on the front surface side wall (52, 53) of the block (5) is provided at the front surface edge (521, 531) in such a way as to extend over the whole of the width direction of the front surface edge (521, 531).

4. Pneumatic tyre tread (1) according to any one of Claims 1 to 3, in which the abovementioned difference G on the upper surface (51) of the block (5) is no greater than 1.5 mm.

5. Pneumatic tyre tread (1) according to any one of Claims 1 to 4, in which the reinforcing part (7) provided on the front surface side wall (52, 53) of the block (5) is provided on both of the two front surface side walls (52, 53) of the block (5).

6. Pneumatic tyre tread (1) according to any one of Claims 1 to 5, in which, when the upper surface (51) of the block (5) is viewed from the direction of the tyre axis of rotation, the angle between a straight line joining the two front surface edges (521, 531) and a tangent to the upper surface (51) passing through the front surface edge (521, 531) is 20° or more.

7. Pneumatic tyre tread (1) according to any one of Claims 1 to 6, in which the reinforcing part (7) provided on the front surface side wall (52, 53) of the block (5) is provided over a region of at least 75% of the front surface side wall (52, 53).

8. Pneumatic tyre tread (1) according to Claim 7, in which the reinforcing part (7) provided on the front surface side wall (52, 53) of the block (5) is provided over the whole region of the front surface side wall (52, 53).

9. Pneumatic tyre tread (1) according to any one of Claims 1 to 8, in which the block is formed in such a way that the mean distance in the tyre circumferential direction between the two front surface edges (521, 531) is at least 15 mm.

10. Pneumatic tyre tread (1) according to any one of Claims 1 to 9, in which the block (5) further has a narrow incision (6) opening to the upper surface (51) and extending inside the block (5) while also extending in the tyre width direction.

11. Pneumatic tyre having a tread (1) according to any one of Claims 1 to 10.

**Patentansprüche**

1. Luftreifenprofil (1), das mittels wenigstens einer Gummizusammensetzung gebildet ist, wobei die wenigstens eine Gummizusammensetzung einen Elastizitätsmodul Et aufweist, der aus dem in der Norm ASTM D882-09 festgelegten Zugdehnungsversuch berechnet ist, wobei das Profil (1) Folgendes umfasst: wenigstens eine umlaufende Hauptrille (3), eine Vielzahl von Nebenrillen (4) und eine Vielzahl von Blöcken (5), die durch die umlaufende Hauptrille (3) und die Nebenrillen (4) festgelegt sind,
wobei wenigstens einer der Blöcke (5) aus der Vielzahl von Blöcken (5) Folgendes umfasst: eine obere Fläche (51), die eine Bodenkontaktfläche (2) darstellt, die wenigstens zum Teil in Kontakt mit einer Straßenfläche ist wenn der Reifen rollt, zwei Vorderflächenseitenwände (52, 53), die entlang der Umfangsrichtung des Reifens positioniert sind, und zwei Seitenflächenseitenwände (54, 55), die entlang der axialen Richtung des Reifens positioniert sind,
wobei die obere Fläche (51) des Blocks (5) zwei Vorderflächenränder (521, 531) aufweist, die an Positionen ausgebildet sind, die die zwei Vorderflächenseitenwände (52, 53) schneiden, wobei der Block (5) einen Verstärkungsteil (7) aufweist, der an wenigstens einer der beiden Vorderflächenseitenwände (52, 53) vorgesehen ist, wobei der Verstärkungsteil (7) aus einem Material gebildet ist, das einen Elastizitätsmodul Ef aufweist, der wenigstens 20-mal größer als der Elastizitätsmodul Et der das Profil (1) bildenden Gummizusammensetzung ist, eine mittlere Dicke zwischen 0,1 mm und 2,0 mm aufweist und auf eine solche Weise vorgesehen ist, dass er wenigstens der Nebenrille (4) über einen Bereich von wenigstens 60 % der Vorderflächenseitenwand (52, 53) zugewandt ist, und
wobei die obere Fläche (51) des Blocks (5) auf eine solche Weise ausgebildet ist, dass, wenn - gesehen aus der Richtung der Drehachse des Reifens - der Abstand zwischen der Drehachse des Reifens und einem beliebigen Punkt auf der oberen Fläche (51) in dem Bereich ausschließlich der beiden Vorderflächenränder (521, 531) gemessen wird, der Abstand größer als ein von der Drehachse des Reifens zu den beiden Vorderflächenrändern (521, 531) gemessener Abstand Re ist, die Differenz G zwischen einem von der Drehachse des Reifens zu der radial äußersten Position auf der oberen Fläche (51) gemessenen Abstand Rt und dem von der Drehachse des Reifens zu den beiden Vorderflächenrändern (521, 531) gemessenen Abstand Re zwischen 0,2 mm und 2,0 mm bei einem neuen Artikel liegt und der Abstand zwischen der radial äußersten Position des Verstärkungsteils (7) und dem Vorderflächenrand (521, 531) nicht mehr als 2,0 mm beträgt.

2. Luftreifenprofil (1) nach Anspruch 1, wobei der an der Vorderflächenseitenwand (52, 53) des Blocks (5) vorgesehene Verstärkungsteil (7) auf eine solche Weise an dem Vorderflächenrand (521, 531) vorgesehen ist, dass er sich wenigstens zum Teil in der Querschnittsrichtung des Vorderflächenrands (521, 531) erstreckt.

3. Luftreifenprofil (1) nach Anspruch 2, wobei der an der Vorderflächenseitenwand (52, 53) des Blocks (5) vorgesehene Verstärkungsteil (7) auf eine solche Weise an dem Vorderflächenrand (521, 531) vorgesehen ist, dass er sich über die gesamte Querschnittsrichtung des Vorderflächenrands (521, 531) erstreckt.

4. Luftreifenprofil (1) nach einem der Ansprüche 1 bis 3, wobei die vorstehend genannte Differenz G auf der oberen Fläche (51) des Blocks (5) nicht größer als 1,5 mm ist.

5. Luftreifenprofil (1) nach einem der Ansprüche 1 bis 4, wobei der an der Vorderflächenseitenwand (52, 53) des Blocks (5) vorgesehene Verstärkungsteil (7) auf beiden der zwei Vorderflächenseitenwände (52, 53) des Blocks (5) vorgesehen ist.

6. Luftreifenprofil (1) nach einem der Ansprüche 1 bis 5, wobei, bei Ansicht der oberen Fläche (51) des Blocks (5) aus der Richtung der Drehachse des Reifens, der Winkel zwischen einer geraden Linie, die die beiden Vorderflächenränder (521, 531) verbindet, und einer Tangente an der oberen Fläche (51), die durch den Vorderflächenrand (521, 531) führt, 20 ° oder mehr beträgt.

7. Luftreifenprofil (1) nach einem der Ansprüche 1 bis 6, wobei der an der Vorderflächenseitenwand (52, 53) des Blocks (5) vorgesehene Verstärkungsteil (7) über einem Bereich von wenigstens 75 % der Vorderflächenseitenwand (52, 53) vorgesehen ist.

8. Luftreifenprofil (1) nach Anspruch 7, wobei der an der Vorderflächenseitenwand (52, 53) des Blocks (5) vorgesehene Verstärkungsteil (7) über dem gesamten Bereich der Vorderflächenseitenwand (52, 53) vorgesehen ist.

9. Luftreifenprofil (1) nach einem der Ansprüche 1 bis 8, wobei der Block auf eine solche Weise ausgebildet ist, dass der in Umfangsrichtung des Reifens gesehene mittlere Abstand zwischen den beiden Vorderflächenrändern (521, 531) wenigstens 15 mm beträgt.

10. Luftreifenprofil (1) nach einem der Ansprüche 1 bis 9, wobei der Block (5) ferner einen schmalen Einschnitt (6) aufweist, der sich zu der oberen Fläche (51) öffnet und sich innerhalb des Blocks (5) erstreckt, während er sich auch in der Querschnittsrichtung des Reifens erstreckt.

11. Luftreifen, aufweisend ein Profil (1) nach einem der Ansprüche 1 bis 10.

**Revendications**

1. Bande de roulement pour pneumatique (1) formée au moyen d'au moins une composition de caoutchouc, l'au moins une composition de caoutchouc ayant un module d'élasticité Et calculé à partir de l'essai de traction défini dans la norme ASTM D882-09 ;
la bande de roulement (1) comprend : au moins une rainure circonférentielle principale (3), une pluralité de rainures auxiliaires (4), et une pluralité de blocs (5) qui sont définis par la rainure circonférentielle principale (3) et les rainures auxiliaires (4) ;
au moins un des blocs (5) parmi la pluralité de blocs (5) comprend : une surface supérieure (51) constituant une surface de contact avec le sol (2) au moins partiellement en contact avec la surface d'une route quand la bande de roulement roule, deux parois latérales de surface frontale (52, 53) positionnées le long de la direction circonférentielle de la bande de roulement, et deux parois latérales de surface latérale (54, 55) positionnées le long de la direction axiale de la bande de roulement ;
la surface supérieure (51) du bloc (5) a deux bords de surface frontale (521, 531) formés à des positions coupant les deux parois latérales de surface frontale (52, 53) ;
le bloc (5) a une partie de renforcement (7) disposée sur au moins une des deux parois latérales de surface frontale (52, 53), la partie de renforcement (7) est formée au moyen d'un matériau ayant un module d'élasticité Ef au moins 20 fois plus élevé que le module d'élasticité Et de la composition de caoutchouc formant la bande de roulement (1), a une épaisseur moyenne comprise entre 0,1 mm et 2,0 mm, et est disposée de manière à faire face au moins à la rainure auxiliaire (4) sur une région représentant au moins 60 % de la paroi latérale de surface frontale (52, 53) ; et
la surface supérieure (51) du bloc (5) est formée de telle sorte que lorsqu'elle est regardée depuis la direction de l'axe de rotation de la bande de roulement, si la distance depuis l'axe de rotation de la bande de roulement jusqu'à n'importe quel point sur ladite surface supérieure (51) est mesurée dans la région excluant les deux bords de surface frontale (521, 531), ladite distance est supérieure à une distance Re mesurée depuis l'axe de rotation de la bande de roulement jusqu'aux deux bords de surface frontale (521, 531), la différence G entre une distance Rt mesurée depuis l'axe de rotation de la bande de roulement jusqu'à la position la plus extérieure radialement sur ladite surface supérieure (51) et la distance Re mesurée depuis l'axe de rotation de la bande de roulement jusqu'aux deux bords de surface frontale (521, 531) se situe entre 0,2 mm et 2,0 mm dans un article neuf, et la distance entre la position la plus extérieure radialement de la partie de renforcement (7) et le bord de surface frontale (521, 531) est inférieure ou égale à 2,0 mm.

**2.** Bande de roulement pour pneumatique (1) selon la revendication 1, dans laquelle la partie de renforcement (7) disposée sur la paroi latérale de surface frontale (52, 53) du bloc (5) est disposée au niveau du bord de surface frontale (521, 531) de manière à s'étendre au moins partiellement dans la direction de la largeur du bord de surface frontale (521, 531).

**3.** Bande de roulement pour pneumatique (1) selon la revendication 2, dans laquelle la partie de renforcement (7) disposée sur la paroi latérale de surface frontale (52, 53) du bloc (5) est disposée au niveau du bord de surface frontale (521, 531) de manière à s'étendre sur la totalité de la direction de la largeur du bord de surface frontale (521, 531).

**4.** Bande de roulement pour pneumatique (1) selon l'une quelconque des revendications 1 à 3, dans laquelle la différence G susmentionnés sur la surface supérieure (51) du bloc (5) est inférieure ou égale à 1,5 mm.

**5.** Bande de roulement pour pneumatique (1) selon l'une quelconque des revendications 1 à 4, dans laquelle la partie de renforcement (7) disposée sur la paroi latérale de surface frontale (52, 53) du bloc (5) est disposée sur les deux parois latérales de surface frontale (52, 53) du bloc (5).

**6.** Bande de roulement pour pneumatique (1) selon l'une quelconque des revendications 1 à 5, dans laquelle, quand la surface supérieure (51) du bloc (5) est regardée depuis la direction de l'axe de rotation de la bande de roulement, l'angle entre une ligne droite reliant les deux bords de surface frontale (521, 531) et une tangente à la surface supérieure (51) passant par le bord de surface frontale (521, 531) est de 20° ou plus.

**7.** Bande de roulement pour pneumatique (1) selon l'une quelconque des revendications 1 à 6, dans laquelle la partie de renforcement (7) disposée sur la paroi latérale de surface frontale (52, 53) du bloc (5) est disposée sur une région représentant au moins 75 % de la paroi latérale de surface frontale (52, 53).

**8.** Bande de roulement pour pneumatique (1) selon la revendication 7, dans laquelle la partie de renforcement (7) disposée sur la paroi latérale de surface frontale (52, 53) du bloc (5) est disposée sur la région entière de la paroi latérale de surface frontale (52, 53).

**9.** Bande de roulement pour pneumatique (1) selon l'une quelconque des revendications 1 à 8, dans laquelle le bloc est formé de telle sorte que la distance moyenne dans la direction circonférentielle de la bande de roulement entre les deux bords de surface frontale (521, 531) est d'au moins 15 mm.

**10.** Bande de roulement pour pneumatique (1) selon l'une quelconque des revendications 1 à 9, dans laquelle le bloc (5) a également une incision étroite (6) s'ouvrant sur la surface supérieure (51) et s'étendant à l'intérieur du bloc (5) tout en s'étendant également dans la direction de la largeur de la bande de roulement.

**11.** Pneumatique ayant une bande de roulement (1) selon l'une quelconque des revendications 1 à 10.

# FIG.1

# FIG.2

【図3】

# FIG.3

# FIG.4

【図5】

# FIG.5

**EP 2 894 050 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7047814 A
- JP 2010105509 A
- JP 2011079186 W
- WO 2013088570 A

**Non-patent literature cited in the description**

- POLYMER PHYSICS. 296